# EUROPEAN PATENT SPECIFICATION

(11) **EP 3 178 744 B1**
(45) Date of publication and mention of the grant of the patent: **06.05.2020**
(21) Application number: 16202596.9
(22) Date of filing: 07.12.2016
(51) Int. Cl.: B65B 61/20, B65B 35/44

(54) **INCREASING STACK STRENGTH USING CRISSCROSS RISERS**
ERHÖHUNG DER STAPELFESTIGKEIT MIT GEKREUZTEN ZWISCHENPLATTEN
AUGMENTATION DE LA RÉSISTANCE D'EMPILEMENT AU MOYEN DE PLAQUES INTERMÉDIAIRES CROISÉS

(30) Priority: 08.12.2015 US 201562264835 P; 05.12.2016 US 201615368918
(43) Date of publication of application: 14.06.2017
(73) Proprietor: Cerf, Alain, Pinellas Park, FL 33782 (US)
(72) Inventor: Cerf, Alain, Pinellas Park, FL 33782 (US)
(74) Representative: Lees, Kate Jane

(56) References cited:
- DE-A1- 2 062 203
- DE-A1- 2 247 086
- US-A- 3 626 661
- US-A- 4 878 337

## Description

### Technical Field

This invention relates to increasing the stacking strengths of a bundle of articles wrapped in heat shrink material wherein the articles cannot support more than one or two bundles on top of each other.

### Background Art

Cardboard board risers have been placed between rows of glass bottles in a corrugated box to avoid glass breakage. The risers can be placed between the bottles in a crisscross manner. These boxes rely on the bottle strength for stacking the boxes of bottles on top of each other not the risers. Cardboard risers have been used with milk cartons with gable tops to increase stack strength. These risers have been limited to using one riser or two risers placed parallel to each other. These bundles containing milk cartons using these risers have not been able to vertically support more than two bundles. The problem in the prior art was the inability to stack a bundle of containers lacking sufficient strength to support at least three or more bundles so the bundles could be stacked on a pallet having at least four bundles high.

US-A-4878337 describes a continuous motion tray type packaging machine in which articles, such as glass containers, are feed continuously in end-to-end relationship through a pin spacer adapted to provide a space between adjacent rows so that cross partitions can be fed therebetween. The articles are then grouped by a pin type grouper to provide predetermined members of article rows and columns in each group. The columns of articles are then spread slightly to allow longitudinal extending partitions to be fed between adjacent columns.

### Summary of invention

The objective of this invention is to increase the stacking strength of a bundle of containers by using crisscrossed cardboard risers between each container. For a four pack there would be two risers. For a six pack there would be two short parallel risers and one long riser perpendicular to the parallel cardboard risers. For a twelve pack there would be three lanes of four containers with at least two parallel risers and two perpendicular risers. More risers can be added if desired.

According to the present invention there is provided a process for increasing the stack strength of a bundle of containers that cannot support more than two bundles on top of a base bundle comprising: moving the containers in at least two separated lanes on a conveyor having a predetermined space between the lanes and wherein each container in a lane is spaced a predetermined distance apart; inserting a first riser in the predetermined space between the lanes wherein the first riser has an opening to mate with an opening in a second riser and inserting the second riser having an opening to mate with the opening in the first riser between the spaced containers in a lane in a direction perpendicular to the first riser to form a crisscross; thereafter closing the space between the containers in a lane and closing the spaces between separated lanes; wrapping the bundle with heat shrinkable film; and heat shrinking the film, wherein the first and second risers have substantially the same height as the containers.

### Brief description of drawings

Figure 1 shows a bundle of six milk cartons with spaces between the cartons for the insertion of risers.
Figure 2 shows a bundle with risers inserted.
Figure 3 shows a bundle of milk cartons with inserted risers.
Figure 4 shows moving spaced containers in a lane for the insertion of risers
Figure 5 shows conveyors for moving the containers.
Figure 6 shows a transfer pusher moving the containers after the risers are inserted

### Description of embodiments

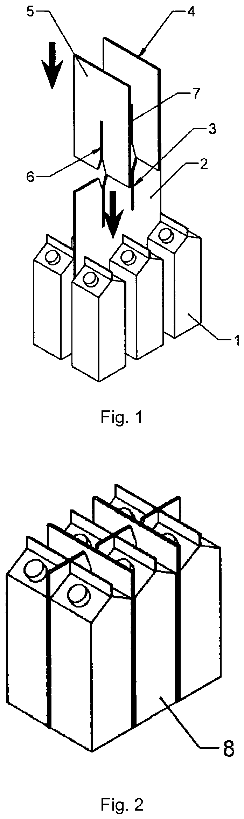

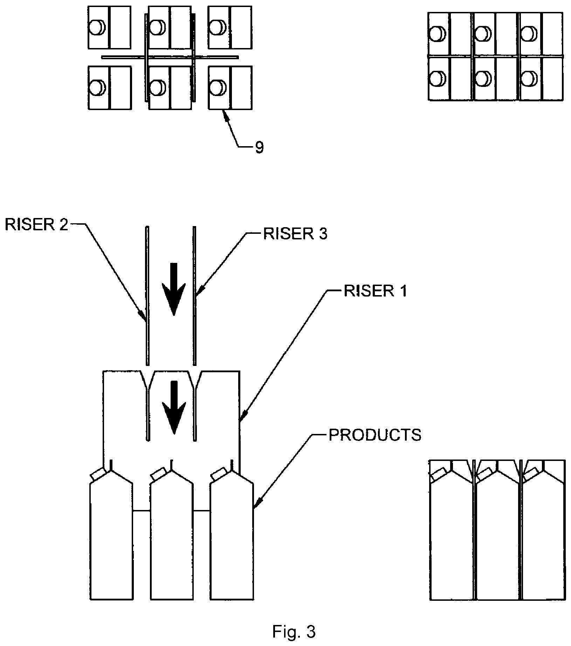

Figure 1 shows a bundle of six milk cartons 1 with a space between the cartons. Cardboard riser 2 is inserted between three of the milk cartons. Cardboard 2 has openings 3 to mate with openings 6 and 7 in cardboard risers 4 and 5. Figure 2 shows cardboard risers 4 and 5 inserted between two of the milk cartons to form a bundle. Figure 3 shows a bundle 9 having spaced milk cartons with the inserted mated risers. The risers are substantially the same height as the milk cartons. Any material that provides the desired stack strength to the bundle can be used as the riser.

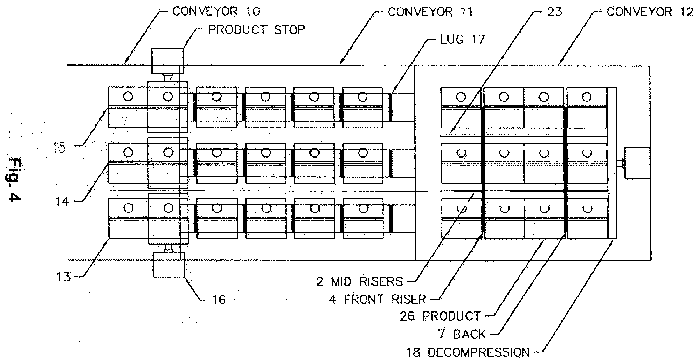

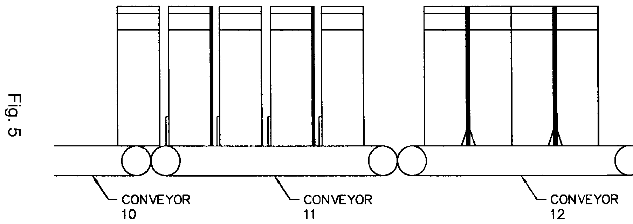

Figures 4 and 5 show belt conveyors 10, 11 and 12 moving the containers in lane 13. Lanes 14 and 15 have identical conveyors to move the containers. Lanes/conveyors 10, 11 and 12 are spaced apart to allow a riser to be inserted between the containers. Stopping means such as a clamp 16 on lane 13 releases the containers in spaced intervals on to conveyor 11 to provide sufficient room for inserting the risers between the containers. Narrow lugs 17 attached to conveyor 11 maintain the conveyors at the desired spacing. Conveyor 11 transports the containers onto conveyor 12. Conveyor 12 moves the bottles/containers against decompression plate 18 to close the space between the containers. Before the spaces between the containers are closed, the conveyors 11 and 12 stop to allow the insertion of risers 2 and 23. After risers 2 and 23 are inserted, risers 4 and 5 are inserted. After the risers are inserted the conveyors start, causing the space between risers 4 and 5 to close.

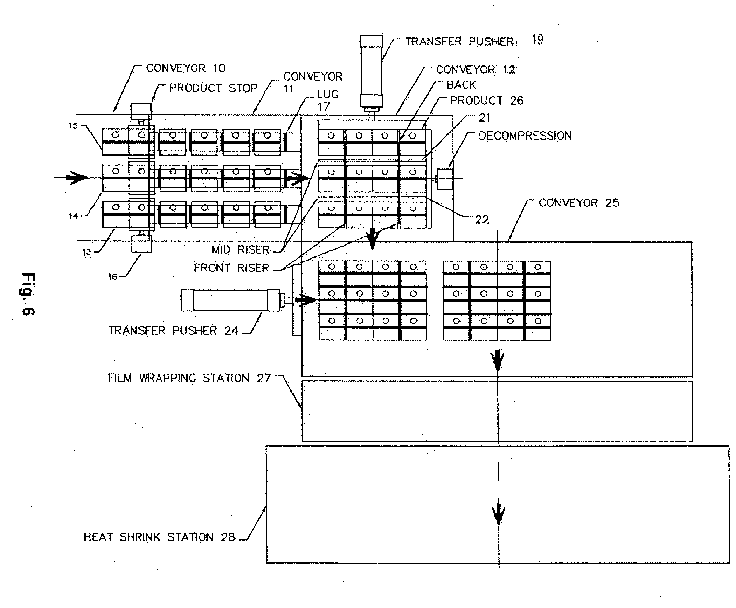

Figure 6 shows transfer pusher 19 pushing the containers off conveyor 12 onto conveyor 20. During the transfer the spaces 21 and 22 are closed. Transfer pusher 24 centers the bundle on conveyor 25. Conveyor 25 moves the product 26 to a film wrapping station 27. After the product is film wrapped the product moves through a heat shrink tunnel 28. The heat shrunk product is stacked on a pallet with at least four products on top of each other.

## Claims

1. A process for increasing the stack strength of a bundle (9) of containers (1) that cannot support more than two bundles on top of a base bundle comprising: moving the containers in at least two separated lanes (13,14, 15) on a conveyor having a predetermined space between the lanes and wherein each container in a lane is spaced a predetermined distance apart; inserting a first riser (2) in the predetermined space between the lanes wherein the first riser has an opening (3) to mate with an opening (6, 7) in a second riser (4, 5) and inserting the second riser having an opening to mate with the opening in the first riser between the spaced containers in a lane in a direction perpendicular to the first riser to form a crisscross; thereafter closing the spaces between the containers in a lane and closing the spaces between separated lanes; wrapping the bundle with heat shrinkable film; and heat shrinking the film, wherein the first and second risers have substantially the same height as the containers.

2. A process according to claim 1 including moving at least two lanes (13, 14, 15) of containers (1) wherein each container in the lane is spaced a predetermined distance apart onto a conveyor (10, 11, 12) where the containers can be stopped from moving.

3. A process according to claim 2 including stopping the conveyor (10, 11, 12) and inserting a riser (2) in the space between the containers (1) in each lane (13, 14, 15) and inserting a riser (4, 5) between two lanes.

4. A process according to claim 3 including starting the conveyor (10, 11, 12) after the risers (2, 4, 5) are inserted to close the spaces between the containers (1) in a lane.

5. A process according to any preceding claim wherein the containers (1) are milk cartons.

## Patentansprüche

1. Verfahren für die Erhöhung der Stapelfestigkeit eines Pakets (9) von Behältern (1), das nicht mehr als zwei Pakete auf einem untersten Paket tragen kann, das Folgendes umfasst: Bewegen der Behälter in mindestens zwei getrennten Bahnen (13, 14, 15) auf einem Förderband, das einen vorgegebenen Raum zwischen den Bahnen aufweist, und wobei jeder Behälter in einer Bahn in einer vorgegebenen Entfernung beabstandet ist; Einführen einer ersten Standplatte (2) in dem vorgegebenen Raum zwischen den Bahnen, wobei die erste Standplatte eine Öffnung (3) aufweist, um sich mit einer Öffnung (6, 7) in einer zweiten Standplatte (4, 5) zu verbinden, und Einführen der zweiten Standplatte, die eine Öffnung aufweist, um sich mit der Öffnung in der ersten Standplatte zu verbinden, zwischen die beabstandeten Behälter in einer Bahn in einer Richtung senkrecht zu der ersten Standplatte, um eine Überkreuzung zu bilden; danach Schließen der Räume zwischen den Behältern in einer Bahn und Schließen der Räume zwischen getrennten Bahnen; Verpacken des Pakets mit Heißschrumpffolie; und Heißschrumpfen der Folie, wobei die erste und zweite Standplatte im Wesentlichen die gleiche Höhe wie die Behälter aufweisen.

2. Verfahren nach Anspruch 1, das das Bewegen von mindestens zwei Bahnen (13, 14, 15) von Behältern (1) einschließt, wobei jeder Behälter in der Bahn in einer vorgegebenen Entfernung auf einem Förderband (10, 11, 12) beabstandet ist, wo die Bewegung der Behälter angehalten werden kann.

3. Verfahren nach Anspruch 2, das das Anhalten des Förderbands (10, 11, 12) und Einführen einer Standplatte (2) in den Raum zwischen den Behältern (1) in jeder Bahn (13, 14, 15) und Einführen einer Standplatte (4, 5) zwischen zwei Bahnen einschließt.

4. Verfahren nach Anspruch 3, das das Starten des Förderbands (10, 11, 12) einschließt, nachdem die Standplatten (2, 4, 5) eingeführt sind, um die Räume zwischen den Behältern (1) in einer Bahn zu schließen.

5. Verfahren nach einem vorstehenden Anspruch, wobei die Behälter (1) Milchpackungen sind.

## Revendications

1. Procédé d'augmentation de la résistance à l'empilement d'un paquet (9) de récipients (1) qui ne peuvent pas supporter plus de deux paquets au-dessus d'un paquet de base, comprenant : déplacer les récipients dans au moins deux voies séparées (13, 14, 15) sur un transporteur ayant un espace prédéterminé entre les voies et dans lequel chaque récipient dans une voie est espacé d'une distance prédéterminée ; insérer une première rehausse (2) dans l'espace prédéterminé entre les voies, dans lequel la première rehausse a une ouverture (3) pour se conjuguer avec une ouverture (6, 7) dans une seconde rehausse (4, 5) et insérer la seconde rehausse ayant une ouverture pour se conjuguer avec l'ouverture dans la première rehausse entre les récipients espacés dans une voie dans une direction perpendiculaire à la première rehausse pour former un quadrillage ; fermer ci-après les espaces entre les récipients dans une voie et fermer les espaces entre des voies séparées ; envelopper le paquet avec du film thermorétrécissable ; et faire subir un thermorétrécissement au film, dans lequel les première et seconde rehausses ont essentiellement la même hauteur que les récipients.

2. Procédé selon la revendication 1, incluant déplacer au moins deux voies (13, 14, 15) de récipients (1), dans lequel chaque récipient dans la voie est espacé d'une distance prédéterminée sur un transporteur (10, 11, 12) où les récipients peuvent être arrêtés de se déplacer.

3. Procédé selon la revendication 2, incluant arrêter le transporteur (10, 11, 12) et insérer une rehausse (2) dans l'espace entre les récipients (1) dans chaque voie (13, 14, 15) et insérer une rehausse (4, 5) entre deux voies.

4. Procédé selon la revendication 3, incluant démarrer le transporteur (10, 11, 12) après que les rehausses (2, 4, 5) sont insérées pour fermer les espaces entre les récipients (1) dans une voie.

5. Procédé selon l'une quelconque des revendications précédentes, dans lequel les récipients (1) sont des cartons pour l'emballage du lait.
